# EUROPEAN PATENT APPLICATION

(11) **EP 1 114 659 A2**
(43) Date of publication of application: **11.07.2001**
(21) Application number: 00311311.5
(22) Date of filing: 18.12.2000
(51) Int. Cl.: A63F 13/10

(54) **Game system and computer-readable storage medium therefor**

(30) Priority: 06.01.2000 JP 2000005760
(71) Applicant: Konami Corporation, Minato-ku, Tokyo (JP)
(72) Inventor: Fukuda, Rie, C/o Konami Computer Entertainment, Higashi-ku, Nagoya-shi, Aichi (JP)
(74) Representative: Haley, Stephen

(57) **Abstract**

A game system (1) includes: a changing unit (2) for changing at least one parameter representing condition of game character in accordance with a situation of game; a storage unit (6) for storing a plurality of music data in correspondence with the parameter; and a reproducing unit (2, 7) for reading out the music data corresponding to the parameter from the storage unit to reproduce game music.

## Description

The present invention relates to a game system which changes game music reproduced during progress of the game according to feeling change of game character in the game.

### Description of Related Art:

In a role-playing game, a simulation game, an action game and the like, a user controls a game character shown on a game screen to achieve a goal, while game music (BGM) is being reproduced. Conventionally, among games of this kind, there is known a game in which various feeling such as delight, anger, sorrow and pleasure are prepared for the feeling of the game character controlled by the user and such feeling of the game character is changed according to the game situation. Further, there is also known a game in which the look of the game character is changed according to the change of the game character's feeling.

However, even if the look of the game character shown on the game screen is changed according to the change of the game character's feeling, it cannot necessarily enhance the presence of the game fully and satisfactorily.

It is an object of the present invention to provide a game system which can enhance the presence of game more effectively than the conventional game systems.

According to one aspect of the present invention, there is provided a game system including: a changing unit for changing at least one parameter representing condition of game character in accordance with a situation of game; a storage unit for storing a plurality of music data in correspondence with the parameter; and a reproducing unit for reading out the music data corresponding to the parameter from the storage unit to reproduce game music.

In accordance with the game system thus configured, the condition of the game character is expressed by the parameters to represent specific condition, e.g., specific personality, of the game character and the game music is selected and reproduced based on the condition. Therefore, the presence of the game may be improved.

The storage unit may store the plurality of music data in correspondence with predetermined levels of the parameter, and the reproducing unit may read out the music data corresponding to the level of the parameter. Therefore, since game music is selected and reproduced based on the specific condition level of the game character, the presence of the game may be improved.

According to another aspect of the present invention, there is provided a game system including: a changing unit for changing at least one parameter representing condition of game character in accordance with a situation of game; a calculating unit for calculating character personality value defining personality of the game character based on a plurality of parameters; a storage unit for storing a plurality of music data in correspondence with the plurality of character personality values; and a reproducing unit for reading out the music data corresponding to the character personality value from the storage unit to reproduce game music. In accordance with the game system thus configured, the game music is selected and reproduced based on the personality value of the game character calculated from the plural parameters, and hence the presence of the game may be improved.

The condition of game character may include a feeling of the game character. Therefore, since game music is selected and reproduced based on the specific personality value of the game character, the present of the game may be improved.

According to another aspect of the present invention, there is provided a computer-readable storage medium carrying a game program for controlling a computer game system to perform: a changing unit for changing at least one parameter representing condition of game character in accordance with a situation of game; a storage unit for storing a plurality of music data in correspondence with the parameter; and a reproducing unit for reading out the music data corresponding to the parameter from the storage unit to reproduce game music.

In accordance with the game system thus configured, the condition of the game character is expressed by the parameters to represent specific condition, e.g., specific personality, of the game character and the game music is selected and reproduced based on the condition. Therefore, the presence of the game may be improved.

The nature, utility, and further features of this invention will be more clearly apparent from the following detailed description with respect to preferred embodiment of the invention when read in conjunction with the accompanying drawings briefly described below.

In the Drawings
FIG. 1 is a diagram showing a schematic configuration of a game system according to the present invention;
FIG. 2 shows correspondence between parameter levels representing game character's feeling and game music files;
FIG. 3 shows correspondence between character personality values and music files; and
FIG. 4 is a flowchart showing the processing for changing game music according to character personality values.

The preferred embodiment of the present invention will now be described below with reference to the attached drawings.

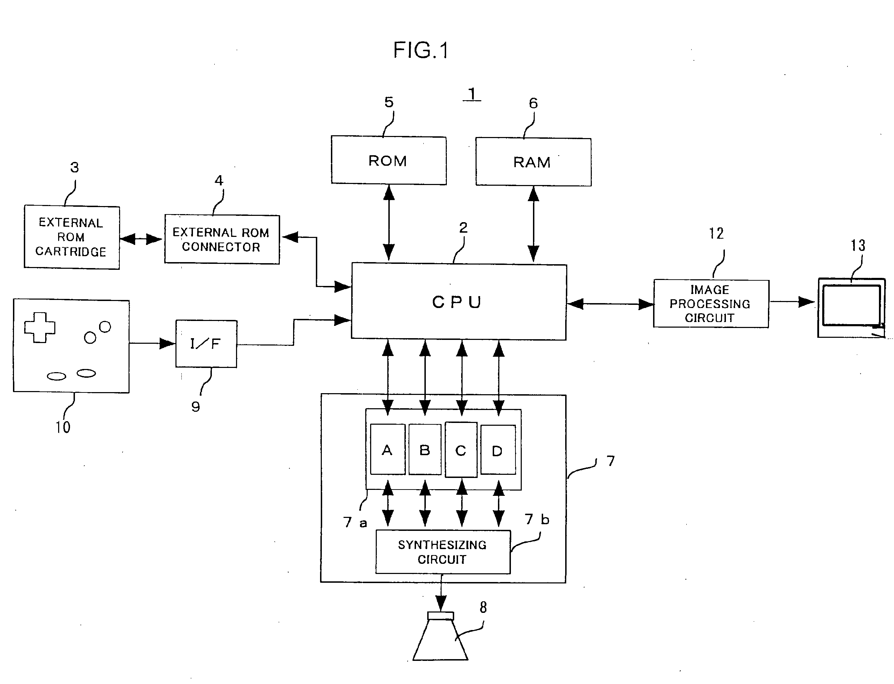

FIG. 1 shows a schematic configuration of the game system 1 according to the present invention. As shown in FIG. 1, the game system 1 includes a CPU 2 which is mainly configured by a microprocessor unit. The CPU 2 totally controls the game system 1 according to the game program stored in the external ROM cartridge 3, with monitoring the signal supplied from the controller 10 via the interface 9. The external ROM cartridge 3 is connected to the CPU 2 via the connecter 4 for external ROM. The external ROM cartridge 3 accommodates a semiconductor memory (ROM or EP-ROM) for storing sound driver, various data and a plurality of parameters defining the game character's feeling in the respective memory areas.

The game of this embodiment is a fishing game in which a game character controlled by a user competes in fishing tournaments. The CPU 2 executes this game.

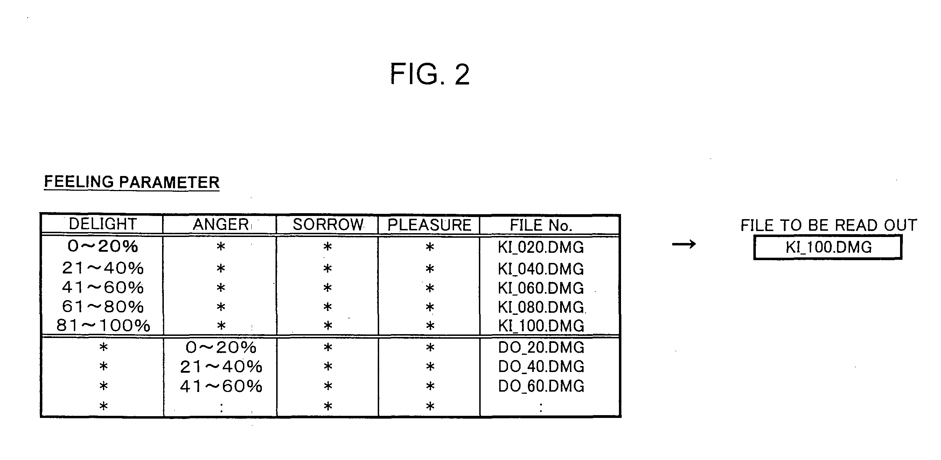

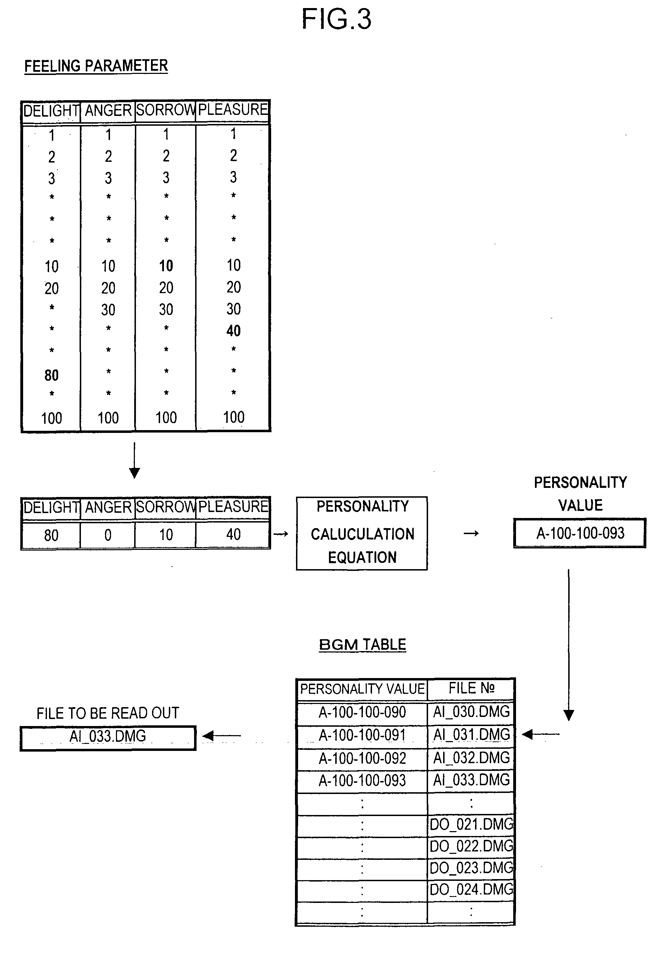

The various data stored in the external ROM cartridge 3 includes game music to be reproduced from the speaker 8 during the progress of the game as well as image and character data to be displayed on the image display device 13. This game music is Background Music (BGM) to be reproduced from the speaker 8 during the fishing tournament, and the external ROM cartridge 3 stores data for plural game music. The plural game music is stored in different files. The data of the game music corresponds to the parameter representing the game character's feeling, and specific correspondence is shown in FIGS. 2 and 3.

FIG. 2 shows a table showing the correspondences between the levels of the parameter representing the game character's feeling and game music files. The parameters representing the game character's feeling include four parameters; "DELIGHT", "ANGER", "SORROW", and "PLEASURE". In FIG. 2, the game character may take one of the four parameters. The level of each parameter is represented by a value (%). To the respective levels of the parameters, different game music files are allocated. For example, if the parameter representing the feeling of the character is "DELIGHT" and its level is 20%, as shown in FIG. 2, the game music file corresponding thereto is "KI_020.DMG". The parameter representing the game character's feeling and the levels of those parameters change according to the situation in the game, e.g., the result of the game character's activity or behavior. The contents of the respective game music corresponding to the parameter levels are different from each other.

On the other hand, FIG. 3 shows correspondence of character's personality values (hereinafter referred to as "character personality value") calculated based on the plural parameters representing the game character's feeling with the game music files. Namely, in FIG. 3 , the game character has plural parameters representing the feeling at the same time, and the character personality values calculated based on the plural parameters correspond to the game music files. For example, in the case where the parameter level of "DELIGHT" is 80%, the parameter level of "ANGER" is 0%, the parameter level of "SORROW" is 10% and the parameter level of "PLEASURE" is 40%, the character personality value "A-100-100-93" calculated from those values corresponds to the game music file No. "AI_033.DMG". The character personality value is calculated by using a predetermined personality calculation equation. It is noted that the parameters representing the game character's feeling are not limited to those four, i.e., "DELIGHT", "ANGER", "SORROW" and "PLEASURE", and other parameters representing different feeling may be used. Further, instead of the feeling of game character, the parameter may define power or ability of the game character.

One game music data includes data of plural music parts. For example, one game music data includes data of A-part, B-part, C-part and D-part. The A-part may store data of main melody, the B-part may store data of sub-melody, C-part may store data of bass-part and the D-part may store data of drums, for example. The respective data contents of the game music are different.

The CPU 2 is connected to the ROM 5 and RAM 6, serving as main storage device. The ROM 5 stores operating system serving as program necessary for the total operational control of the game system 1 as well as necessary data for the execution of the operation system. The RAM 6 includes a plurality of storage areas for temporarily storing various data during the game processing. For example, the RAM 6 temporarily stores game music data to be reproduced from the speaker 8 during the progress of the game. The CPU 2 stores sound driver for outputting the game music data to the audio processing circuit 7 into the work area of the RAM 6. The audio processing circuit 7 includes the port 7a and the synthesizing circuit 7b. The CPU 2 reads out, from the RAM 6, the game music data corresponding to the parameter representing the character's feeling at that time, and outputs it to the audio processing circuit 7. The port 7a includes the A-port, the B-port, the C-port and the D-port. These ports convert the data of the respective parts of the game music into sound source signals and output them.

The CPU 2 reads out the data of the respective parts constituting the game music data from the RAM 6, and outputs them to the corresponding ports. For example, the CPU 2 outputs the A-part data to the A-port, outputs the B-part data to the B-port, outputs the C-part data to the C-port and outputs the D-part data to the D-port. The A-port and the B-port are pulse generating sound sources (PSG). The C-port is a simplified waveform generating sound source, and the D-port is a noise generating sound source.

The synthesizing circuit 7b synthesizes the sound source signals outputted from the port 7a, converts the synthesized signal into an analog audio signal, and outputs it to the speaker 8 at predetermined timings. Thus, one game music is produced by synthesizing the respective parts prepared in advance.

The CPU 2 is connected to the controller 10 via the interface 9. The controller 10 is an input device which outputs signal corresponding to the manipulation made by a user. The controller 10 includes a cross-key 10a for selecting behavior of the game character which is set as an object of the manipulation and shown on the display device 13, decide-keys 10b for deciding the behavior or activity of the game character, and a start-key 10c for inputting an instruction to start the game. By this, in the game according to this embodiment, a user can feel as if he or she were the game character set as the manipulation object and shown on the image display device 13, and can freely control the game character's behavior and activity according to the above-described game program. The CPU 2 is connected to the image display device 13 via the image processing circuit 12. The image processing circuit 12 converts the image data into the video signal according to the instruction by the CPU 2 and outputs it to the image display device 13 at appropriate timings.

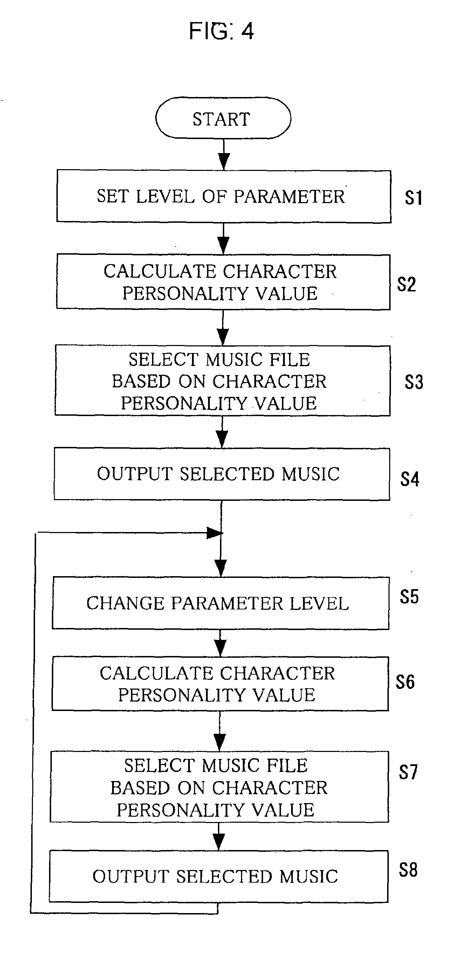

Next, by referring to FIG. 4, the description will be given of a processing for changing the game music according to the character personality values. When the game program is started, the CPU 2 reads out necessary game music data as well as image and character data from the external ROM cartridge 3, and stores them into the RAM 6. Then, the CPU 2 executes the fishing game according to the instruction inputted by the user via the controller 10.

Then, the CPU 2 refers to the signal from the controller 10 and sets the respective levels of the parameters representing the feeling of the game character which is an object of the control by the user. (S1). For example, the CPU 2 sets the level of the parameter "DELIGHT" to 80%, the level of the parameter "ANGER" to 0%, the level of the parameter "SORROW" to 10% and the level of the parameter "PLEASURE" to 40%. Next, the CPU 2 substitutes those levels of the parameters representing the game character's feeling into the personality calculation equation to calculate the character personality value (S2). Then, the CPU 2 refers to the RAM 6 and selects the file having the file number corresponding to the calculated character personality value (S3). Then, the CPU 2 reads out the game music stored in the selected file from the RAM 6, and outputs it to the speaker 8 via the audio processing circuit 7 while referring to the sound driver stored in the RAM 6 (S4).

Then, the user controls the game character during the fishing game by manipulating the controller 10 to perform virtual fishing. During the virtual fishing, the CPU 2 varies the parameters representing the game character's feeling based on the result of the behavior or activity of the game character controlled by the manipulation by the user (S5). For example, when the game character fails to catch fish, the CPU 2 changes the "DELIGHT" parameter level to 30%, the "ANGER" parameter level to 50%, the "SORROW" parameter level to 60% and "PLEASURE" parameter level to 20%. When the game character successfully catches fish, the CPU 2 changes the "DELIGHT" parameter level to 100%, the "ANGER" parameter level to 0%, the "SORROW" parameter level to 0% and "PLEASURE" parameter level to 60%.

Next, the CPU 2 substitutes the parameter levels after the change into the personality calculation equation to calculate the character personality value (S6). Thereafter, the CPU 2 refers to the RAM 6 and selects file number corresponding to the character personality value thus calculated (S7). Next, the CPU 2 reads out the game music data stored in the selected file from the RAM 6, and outputs the game music data to the speaker 8 via the audio processing circuit 7 with referring to the sound driver stored in the RAM 6 (S8). For example, if the "DELIGHT" parameter level is changed to 100%, the "ANGER" parameter level is changed to 0%, the "SORROW" parameter level is changed to 0% and the "PLEASURE" parameter level is changed to 60%, the CPU 2 reads out and reproduces the game music data of file No. "AI_030.DMG" corresponding to the character personality value "A-100-100-090" calculated based on those parameter values.

In this way, in the present invention, the parameters representing the game character's feeling is changed, in real-time basis, according to the activity result of the game character, and the game music reproduced from the speaker 8 is changed accordingly. Therefore, since the feeling change of the game character is reflected in the game music being reproduced, the user can audibly feel the game character's feeling change. This may improve the presence of the game and may enhance the spirit of the user playing the game.

In the above described embodiment, the game music includes four parts, and those parts are synthesized by the synthesizing circuit 7b to form the game music to be reproduced. However, one or some of those parts may be omitted in forming the game music to be reproduced. For example,only the A-part, B-part and C-part may be read out from the RAM 6 and synthesized by the synthesizing circuit to form game music having different impression. Thus, it is possible to improve the variation of the game music reproduced in correspondence with the parameter representing the game character's feeling.

In addition, the above embodiment reads out different game music data in accordance with the parameter representing the game character's feeling. However, the data to be read out may be not only music data but also other data. For example, if data relates to the look of the character, the look of the character gradually changes as the level of the "DELIGHT" parameter of the character changes from 0% to 100%.

In the above embodiment, the game music data are stored in the numbered files, respectively. However, the game music data may be numbered without being stored in the files. In that case, such as a role-playing game, a simulation game, an action game, and the like. Further, the present invention may be applied to a portable large-size home-use game system as well as a portable small-size home-use game system. Also, the present invention may be applied to a game system utilizing network.

As described above, according to the present invention, by expressing the condition (feeling) of the character by the parameter values, the specific condition of the character is expressed and the game music is selected and reproduced based on the condition. Therefore, the user can feel the condition change of the character by listening to the game music. By this, the presence of the game may be improved, and the user's spirit to the game may be enhanced.

## Claims

1. A game system (1) comprising:
a changing means (2) for changing at least one parameter representing condition of game character in accordance with a condition of game;
a storage means (6) for storing a plurality of music data in correspondence with the parameter; and
a reproducing means (2, 7) for reading out the music data corresponding to the parameter from the storage means to reproduce game music.

2. A game system (1) according to claim 1, wherein the storage means (6) stores the plurality of music data in correspondence with predetermined levels of the parameter, and wherein the reproducing means (2, 7) reads out the music data corresponding to the level of the parameter.

3. A game system (1) comprising:
a changing means (2) for changing at least one parameter representing condition of game character in accordance with a condition of game;
a calculating means (2) for calculating character personality value defining personality of the game character based on a plurality of parameters;
a storage means (6) for storing a plurality of music data in correspondence with the plurality of character personality values; and
a reproducing means (2, 7) for reading out the music data corresponding to the character personality value from the storage means to reproduce game music.

4. A game system (1) according to claim 1, wherein the condition of game character includes a feeling of the game character.

5. A computer-readable storage medium (3) carrying a game program for controlling a computer game system (1) to perform:
a changing means (2) for changing at least one parameter representing condition of game character in accordance with a condition of game;
a storage means (6) for storing a plurality of music data in correspondence with the parameter; and
a reproducing means (2, 7) for reading out the music data corresponding to the parameter from the storage means to reproduce game music.
